# EUROPÄISCHE PATENTSCHRIFT

(11) **EP 1 072 945 B1**
(45) Veröffentlichungstag und Bekanntmachung des Hinweises auf die Patenterteilung: **08.01.2003**
(21) Anmeldenummer: 99114235.7
(22) Anmeldetag: 27.07.1999
(51) Int. Cl.: G03B 27/53, G03B 27/62, G03D 15/00

(54) **Fotoelektrische Abtastvorrichtung für ein fotografisches Kopiergerät**
Photoelectrical scanning device for a photographic printer
Dispositif de balayage photoélectrique pour tireuse photographique

(43) Veröffentlichungstag der Anmeldung: 31.01.2001
(73) Patentinhaber: IMIP LLC, Wilmington, Delaware 19801 (US)
(72) Erfinder: Schaub, Heinrich, 5430 Wettingen (CH); Koch, Willy, 8112 Otelfingen (CH)
(74) Vertreter: Schwabe - Sandmair - Marx

(56) Entgegenhaltungen:
- EP-B- 0 515 428
- DE-A- 2 640 453
- US-A- 4 555 632
- US-A- 5 041 995
- PATENT ABSTRACTS OF JAPAN vol. 009, no. 323 (P-414), 18. Dezember 1985 (1985-12-18) -& JP 60 149039 A (FUJI SHASHIN KOKI KK), 6. August 1985 (1985-08-06)

## Beschreibung

Die Erfindung betrifft eine fotoelektrische Abtastvorrichtung für auf einem fotografischen Film enthaltene Bildvorlagen gemäss dem Oberbegriff des unabhängigen Anspruchs.

Bei der Herstellung von fotografischen Kopien in modernen Kopiergeräten werden die Kopiervorlagen - die auf einem entwickelten fotografischen Film enthaltenen Bildvorlagen (sog. Frames) - im allgemeinen bildpunktweise fotoelektrisch abgetastet (gescanned). Die dabei ermittelten Abtastwerte werden dann für den eigentlichen Kopierprozess, insbesondere auch die Steuerung der Belichtung, ausgewertet. Bei der immer stärker aufkommenden digitalen Bildherstellung werden Vorlagen ebenfalls bildpunktweise mit sehr hoher Auflösung fotoelektrisch abgetastet, wobei die Abtastwerte die gesamte Bildinformation darstellen und zur fotografischen oder drucktechnischen Aufzeichnung auf ein Trägermedium verwendet werden. Der die abzutastenden Bilder enthaltende Film läuft für die Abtastung längs eines Pfads durch die Abtastvorrichtung, wobei jedes Bild in einer Abtastposition angehalten und abgetastet wird.

Voraussetzung für die korrekte Positionierung der abzutastenden Bilder ist die Kenntnis der örtlichen Lagen der Bilder auf dem Film. Bei Filmtypen, welche selbst keinerlei Information über die Lagen der Bilder aufweisen, beispielsweise etwa die bekannten 135er-Filme, werden die Lagen der Bilder (Frames) auf dem Film (z.B. relativ zum Anfang des Films oder eines Abschnitts desselben) mittels eines separaten, auf fotoelektrischer Abtastung basierenden Bildstellen-Detektors (Frame-Detektors) ermittelt und die dabei gewonnenen Lageinformationen der Filmtransport- und -positioniereinrichtung in der Abtastvorrichtung mitgeteilt. Im Detail kann dies beispielsweise wie in der US-A-5 285 235 beschrieben erfolgen.

Weiters ist es im Fotofinishing allgemein bekannt und üblich, an Filmen, welche selbst keine Information über die Lage der auf ihnen enthaltenen Bilder aufweisen, im Bereich ihres seitlichen Rands Kerben anzubringen, welche in definierter örtlicher Zuordnung zu den einzelnen Bildern (Frames) auf dem Film stehen. Diese Kerben können dann in anderen Bearbeitungsstufen zur Positionierung der Bildstellen herangezogen werden. Für die Positionierung des Films im Kerbegerät werden ebenfalls auf fotoelektrischer Abtastung basierende Bildstellen-Detektoren eingesetzt, welche entweder Bestandteil des Kerbgeräts sind oder wieder in einem separaten Gerät angeordnet sind, wobei dann die Lageinformationen der Filmtransport- und-positioniereinrichtung im Kerbgerät mitgeteilt wird, was im Einzelnen beispielsweise wieder wie in der schon genannten US-A-5 285 235 erfolgen kann.

In der europäischen Patentanmeldung Nr. 98 116 162.3 jetzt veröffentlicht als EP 0 987 588 A, ist eine für die Fotofinishing-Praxis typische Situation beschrieben. Ein entwickelter fotografischer Film wird von einer Rolle abgewickelt, nacheinander durch eine fotoelektrische Abtasteinrichtung (Film-Scanner) und eine Kerbeinrichtung geführt und schliesslich wieder zu einer Rolle aufgewickelt. Die Abtasteinrichtung und die Kerbeinrichtung sind mittels dynamischer Schlaufen mechanisch entkoppelt. Wegen dieser mechanischen Entkopplung müssen die einzelnen Bildstellen des Films unabhängig voneinander sowohl in der Abtasteinrichtung als auch in der Kerbeinrichtung örtlich positioniert werden.

Aus der US 5 041 995 A sind Filmbühnen mit Lichtquellen zur Beleuchtung einer Bildvorlage bekannt, in denen die Bildvorlage zweidimensional abgetastet wird. Diesen vorgeschaltet ist eine getrennte Bildbühne zur visuellen Inspektion durch einen Operator, in der sich eine Filmkerbeinrichtung, jedoch keine Abtastvorrichtung befindet. Die Filmpositionierung in den Abtast-Filmbühnen geschieht mittels Positioniereinrichtungen, die die zuvor angebrachten Filmkerben nutzen.

Ausgehend von diesem Stand der Technik ist es eine Aufgabe der vorliegenden Erfindung, das fotoelektrische Abtasten von fotografischen Filmen und die Anbringung von Positionierungskerben zu vereinfachen und dabei insbesondere den apparativen Aufwand für die Positionierung der Filme bzw. der auf ihnen enthaltenen Bilder zu reduzieren.

Die Lösung dieser der Erfindung zugrundeliegenden Aufgabe ergibt sich aus den im unabhängigen Anspruch beschriebenen Merkmalen. Besonders vorteilhafte Ausgestaltungen und Weiterbildungen sind Gegenstand der abhängigen Ansprüche.

Erfindungsgemäss ist also die Filmkerbeinrichtung direkt in die Abtastvorrichtung integriert, so dass die Positionierung der Filme bzw. der auf ihnen befindlichen Bilder nur einmal erfolgen muss. Dadurch reduziert sich der bei separaten Abtast- und Kerbvorrichtungen erforderliche apparative und steuerungstechnische Positionierungsaufwand erheblich. Ausserdem benötigt die erfindungsgemässe Abtastvorrichtung wesentlich weniger Raum als zwei separate Vorrichtungen, was insbesondere bei der Anordnung der Vorrichtung innerhalb eines Kopiergeräts von Bedeutung ist.

Im folgenden wird die Erfindung anhand der Zeichnung näher erläutert. Es zeigen:

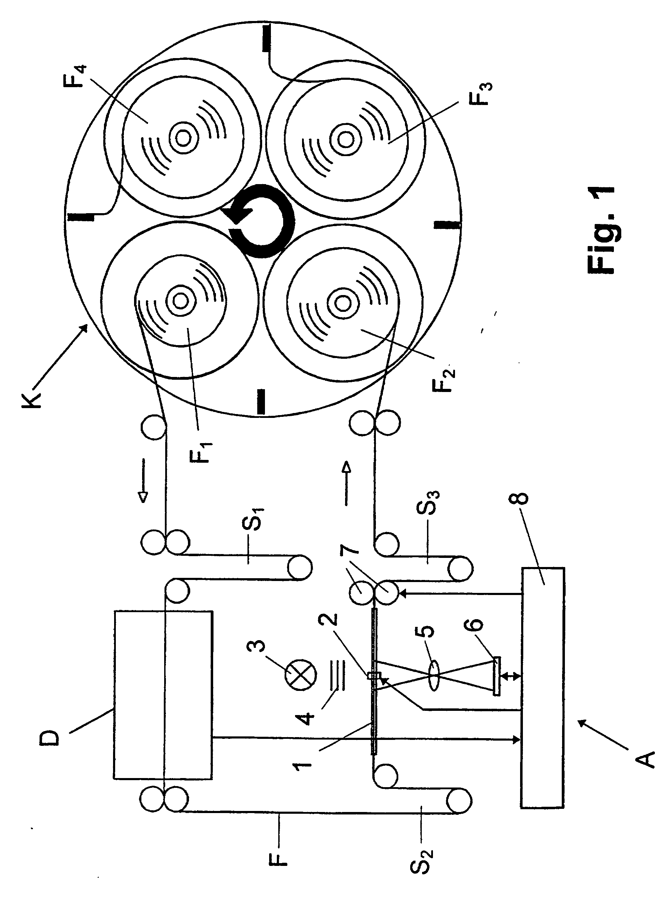

- Fig. 1: eine Prinzipskizze eines Ausführungsbeispiels der erfindungsgemässen Abtastvorrichtung,
- Fig. 2: eine Schrägansicht der Filmbühne der Abtastvorrichtung der Fig. 1,
- Fig. 3: eine Schrägansicht des Schlittens der Filmbühne,
- Fig. 4: eine Schrägansicht der Filmkerbeinrichtung der Abtastvorrichtung und
- Fig. 5: eine Seitenansicht der Filmkerbeinrichtung.

In Fig. list die erfindungsgemässe Abtastvorrichtung zum besseren Verständnis im Kontext mit an sich bekannten vor- und nachgeschalteten Komponenten dargestellt. Diese Komponenten sind ein drehbares Filmkarussel K mit vier darauf befindlichen Filmspulen F₁-F₄ und ein Bildstellen- (Frame-) Detektor D. Das Filmkarussel K, der Bildstellen-Detektor D und die als Ganzes mit A bezeichnete Abtastvorrichtung sind durch drei Schlaufenanordnungen S₁-S₃ gegenseitig mechanisch entkoppelt. Das Filmkarussel K und die mechanische Entkopplung mittels der Schlaufenanordnungen S₁-S₃ sind in der schon erwähnten europäischen Patentanmeldung Nr. 98 116 162.3 in allen Einzelheiten beschrieben und bedürfen deshalb keiner näheren Erläuterung.

Ein abzutastender und zu kerbender Film F wird von der Filmspule F₁ abgezogen, durchläuft nacheinander den Bildstellen-Detektor D und die Abtastvorrichtung A und wird schliesslich auf die Filmspule F₂ aufgewickelt. Der Bildstellen-Detektor D ermittelt die relativen Lagen der einzelnen Bildvorlagen (Frames) auf dem Film. Die Abtastvorrichtung A wertet diese Positionsinformationen für die Positionierung der einzelnen Bildvorlagen in ihr aus. Im Einzelnen kann dies z.B. so wie in der schon erwähnten US-A-5 285 235 erfolgen, so dass der Fachmann keiner näheren Erläuterung bedarf.

Die Abtastvorrichtung A selbst umfasst eine Filmbühne 1 für den abzutastenden Film F, eine erfindungsgemäss in bzw. an der Filmbühne 1 angeordnete Filmkerbeinrichtung 2, eine z.B. als Halogenlampe ausgebildete Weisslichtquelle 3, einen beispielsweise farbsequentiell arbeitenden Farbverschluss 4, eine Abbildungsoptik 5 und einen z.B. als zweidimensionales Feld von CCD-Fotodioden ausgebildeten fotoelektrischen Wandler 6. Ferner sind durch Walzen 7 symbolisierte Mittel zum Transport des Films F durch die Abtastvorrichtung sowie eine Elektronik 8 zur Steuerung aller elektrischen und elektronischen Komponenten der Abtastvorrichtung, insbesondere auch des Transports und der Positionierung des Films F bzw. der auf ihm befindlichen Bildvorlagen vorgesehen.

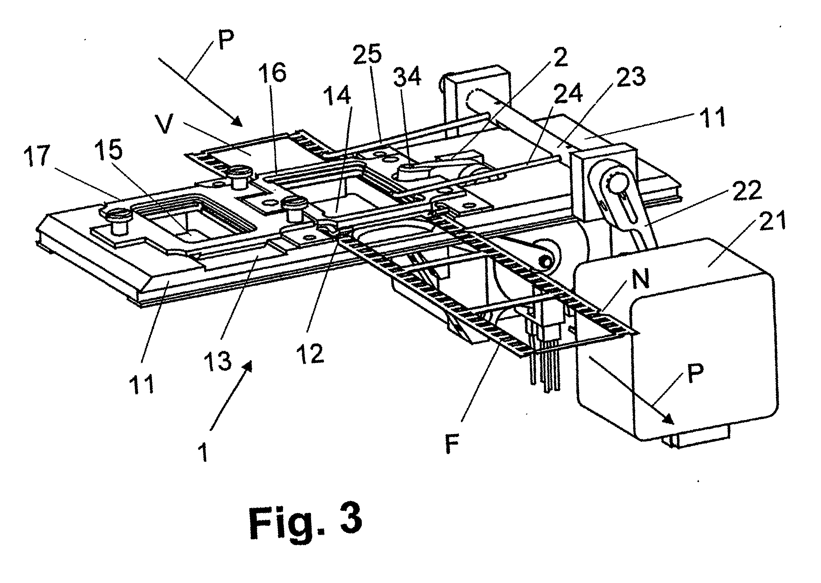

Das von der Lichtquelle 3 ausgehende Licht durchsetzt den Farbverschluss 4 und beaufschlagt dann die in der Filmbühne 1 positionierten abzutastenden, auf dem Film F enthaltenen Bildvorlagen V (Fig.3). Die Bildvorlagen V werden mittels der Abbildungsoptik 5 auf den fotoelektrischen Wandler 6 abgebildet. Dieser löst jede abzutastende Bildvorlage V örtlich in einzelne Bildpunkte auf und wandelt die Intensität des von jedem einzelnen Bildpunkt einer Bildvorlage ausgehenden Messlichts in ein entsprechendes elektrisches Abtastsignal um. Die Bildvorlage V und damit auch der fotoelektrische Wandler 6 wird dabei gesteuert durch den Farbverschluss 4 sequentiell jeweils für eine bestimmte Belichtungsdauer mit Messlicht dreier oder mehrerer verschiedener Farben beaufschlagt, und die bei jeder Belichtung resultierenden Abtastsignale werden nach jeder Belichtung von der Elektronik 8 ausgelesen.

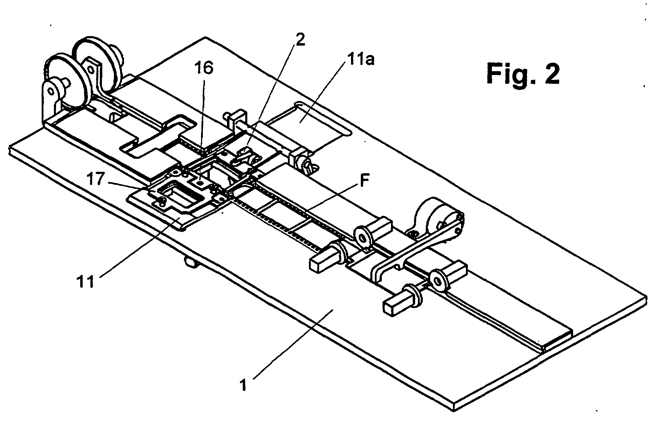

Soweit entspricht die erfindungsgemässe Abtastvorrichtung in Aufbau und Funktion herkömmlichen farbsequentiellen Abtastvorrichtungen, so dass sich für den Fachmann eine detailliertere Erläuterung erübrigt. Die Unterschiede der erfindungsgemässen Abtastvorrichtung gegenüber dem Stand der Technik liegen lediglich im Vorhandensein der Filmkerbeinrichtung 2 sowie im daraus resultierenden speziellen Aufbau der Filmbühne 1. Auf die Filmkerbeinrichtung 2 und die Filmbühne 1 wird im folgenden anhand der Figuren 2-5 näher eingegangen.

Gemäss den Figuren 2 und 3 umfasst die Filmbühne 1 einen Schlitten 11, welcher in der Filmbühne 1 in einer Führung 11a quer zum Transportpfad P des Films F verstellbar angeordnet ist. Der Schlitten 11 weist zwei zum Transportpfad P parallele rinnenförmige Filmführungen 12 und 13 auf, die für verschieden breite Filmformate ausgelegt sind. Typischerweise ist die Filmführung 12 auf das 135er-Format und die Filmführung 13 auf das 24 mm Format abgestimmt. Durch die Verstellung des Schlittens 11 kann jeweils die eine oder die andere Filmführung 12 bzw. 13 in den Transportpfad P eingebracht werden.

Im Bereich der beiden Filmführungen 12 und 13 ist je ein Abtastfenster 14 bzw 15 vorgesehen. Diese Abtastfenster legen jeweils eine Abtastposition fest, in welcher die auf dem Film F befindlichen Bildvorlagen V positioniert werden.

Oberhalb der beiden Abtastfenster 14 und 15 ist auf dem Schlitten 11 je eine Andruckmaske 16 bzw. 17 angeordnet, welche auf die Formate der in den ihnen zugeordneten Filmführungen 12 und 13 geführten Filme abgestimmt sind. Die Andruckmasken 16 und 17 sind auf den Schlitten 11 hin und von diesem weg beweglich angeordnet. Durch Niederdrücken einer Andruckmaske gegen den darunterliegenden Schlitten wird der in der zugeordneten Filmführung laufende Film arretiert. Zum Niederdrücken der Andruckmasken ist ein in der Filmbühne 1 ortsfest angeordneter elektrischer Antrieb vorgesehen, welcher in an sich bekannter Weise aus einem Elektromotor 21, einer vom Motor getriebenen Antriebskurbel 22, einer mit der Antriebskurbel gekoppelten Welle 23 und zwei auf der Welle befestigten, radial von dieser abstehenden Federbügeln 24 und 25 besteht. Die beiden Federbügel 24 und 25 stehen mit der jeweils im Transportpfad P befindlichen Andruckmaske 16 bzw. 17 in Eingriff und drücken diese je nach Drehstellung der Antriebskurbel 22 und damit der Welle 23 gegen den darunterliegenden Schlitten 11. Das Abheben der Andruckmaske kann z.B. durch eine federnde Lagerung oder federnde Ausbildung derselben erfolgen, wenn die beiden Federbügel 24 und 25 wieder nach oben geschwenkt werden.

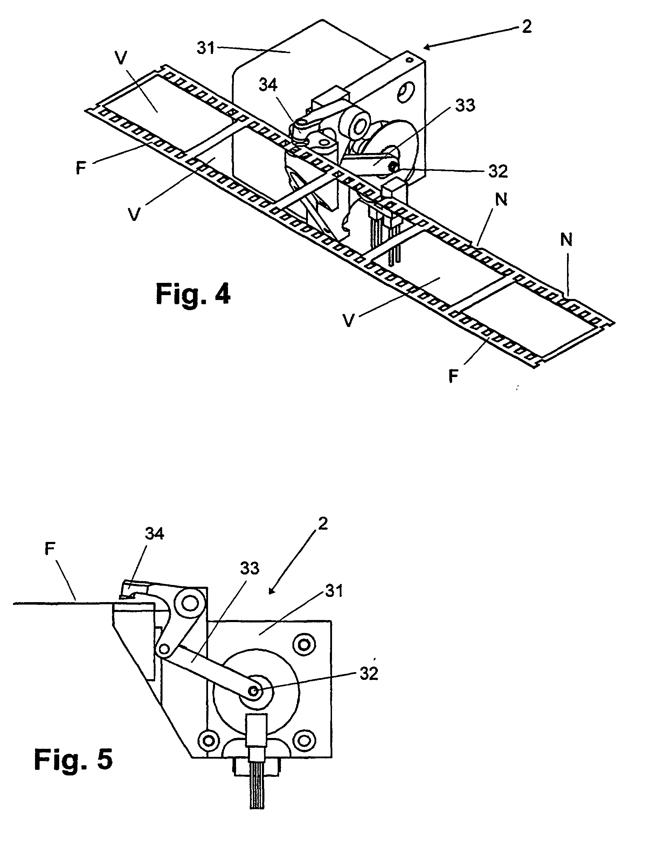

Im Bereich des im Filmtransportpfad P befindlichen Abtastfensters 14 ist seitlich etwas ausserhalb desselben die Filmkerbeinrichtung 2 angeordnet. Die Kerbeinrichtung 2 ist an sich konventionell aufgebaut und umfasst im wesentlichen einen Antriebsmotor 31, eine vom Motor angetriebene Antriebskurbel 32 und einen mit der Kurbel über ein Gestänge 33 gekoppelten schwenkbaren Stanzfinger 34. Der Stanzfinger 34 ragt seitlich in den Randbereich des Films F und vollführt bei jeder Umdrehung des Antriebsmotors 31 eine Auf- und Abbewegung, wobei aus dem Rand des Films F in an sich bekannter Weise eine halbkreisförmige Kerbe N herausgestanzt wird. Die Einzelheiten der Kerbeinrichtung 2 sind am besten aus den Figuren 4 und 5 ersichtlich.

Im Betrieb wird der abzutastende Film F längs des Filmtransportpfads P schrittweise durch die Abtastvorrichtung A geführt, wobei jede einzelne auf dem Film enthaltene Bildvorlage V im Abtastfenster 14 positioniert wird. Der Transport und die Positionierung erfolgt dabei in an sich bekannter Weise mittels der motorisch angetriebenen Transportrollen 7 gesteuert durch die Elektronik 8 aufgrund der vom Bildstellen-Detektor D gelieferten Informationen über die Lage der einzelnen Bildvorlagen V auf dem Film F. Wenn eine Bildvorlage V korrekt positioniert ist und der Film F vollständig stillsteht, werden die Antriebsmotoren 21 und 31 in Bewegung gesetzt. Dabei wird der Film mittels der Andruckmaske 16 auf dem Schlitten 11 festgeklemmt und eine Kerbe N aus dem Filmrand herausgestanzt. Nach einer einstellbaren kurzen Beruhigungsphase erfolgt dann die fotoelektrische Abtastung der in Abtastposition festgehaltenen Bildvorlage V. Anschliessend werden die Andruckmaske 16 wieder angehoben und der Stanzfinger 34 wieder nach oben bewegt und der Film weitertransportiert, bis die nächste Bildvorlage V in die Abtastposition gelangt, und so weiter. Falls aus irgendwelchen Gründen keine Abtastung vorgenommen werden soll, kann der Film selbstverständlich auch nur gekerbt werden.

## Patentansprüche

1. Fotoelektrische Abtastvorrichtung für auf einem fotografischen Film enthaltene Bildvorlagen, mit einer Filmbühne (1) für den Film (F), um die auf dem Film enthaltene Bildvorlagen vorübergehend jeweils in einer definierten Abtastposition festzuhalten, mit einer Lichtquelle (3) zur Beleuchtung einer in Abtastposition befindlichen Bildvorlage (V), mit einem fotoelektrischen Wandler (6), der von der in Abtastposition befindlichen Bildvorlage durchgelassenes Licht empfängt, mit optischen Mitteln (5), um die in Abtastposition befindliche Bildvorlage (V) auf den Wandler (6) abzubilden, mit einer Elektronik (8) zur Ansteuerung des Wandlers (6) und zur Auslesung der von diesem erzeugten Abtastsignale, und mit einer Filmkerbeinrichtung (2), **dadurch gekennzeichnet, dass** die Filmkerbeinrichtung an der Filmbühne (1) im Bereich der Abtastposition vorgesehen ist, welche in vorgegebener örtlicher Zuordnung zur jeweils in Abtastposition befindlichen Bildvorlage (V) eine Positionskerbe (N) in den seitlichen Rand des Films (F) stanzt, und dass der fotoelektrische Wandler (6) das von der Bildvorlage durchgelassene Licht zweidimensional bildpunktweise in elektrische Abtastsignale umwandelt.

2. Vorrichtung nach Anspruch 1, **dadurch gekennzeichnet, dass** die Filmbühne (1) eine Filmführung (12), eine der Filmführung zugeordnete, im Bereich der Filmführung (12) auf die Filmbühne zu und von dieser wieder weg bewegbare Andruckmaske (16) und Antriebsmittel (21-25) für die Bewegung der Andruckmaske (16) aufweist.

3. Vorrichtung nach Anspruch 2, **dadurch gekennzeichnet, dass** ein Filmpfad (P) vorgesehen ist, längs welchem der Film (F) auf der Filmbühne (1) in der Abtastvorrichtung geführt ist, die Filmbühne (1) mit einem quer zum Filmpfad (P) verstellbaren Schlitten (11) versehen ist, dass die Filmführung (12) und die Andruckmaske (16) auf dem Schlitten (11) angeordnet sind, dass der Schlitten (11) mit mindestens einer weiteren Filmführung (13) ausgestattet ist und für jede weitere Filmführung eine dieser zugeordnete weitere bewegliche Andruckmaske (17) aufweist, wobei durch Verstellung des Schlittens (11) quer zum Filmpfad (P) jeweils eine der Filmführungen (12,13) in den Filmpfad (P) gebracht werden kann, und dass die Antriebsmittel (21-25) diejenige Andruckmaske (16) antreiben, welche der jeweils im Filmpfad (P) befindlichen Filmführung (12) zugeordnet ist.

## Claims

1. Photoelectric scanning device for original images contained on a photographic film, with a film stage (1) for the film (F) to hold each of the original images contained on the film temporarily in a defined scanning position, with a light source (3) to illuminate an original image (V) situated in a scanning position, with a photoelectric transducer (6) that receives light transmitted through the original image situated in the scanning position, with optical means (5) to image the original image (V) situated in the scanning position onto the transducer (6), with electronics (8) to drive the transducer (6) and read out the scanning signals generated by the latter, and with a film notching device (2), **characterized in that** the film notching device is provided on the film stage (1) in the region of the scanning position, which punches a positioning notch (N) in the margin at the side of the film (F) in a pre-determined positional assignment relative to the original image (V) situated in the scanning position at the respective time, and **in that** the photoelectric transducer (6) converts the light transmitted through the original image into electrical scanning signals, two dimensionally and pixel-by-pixel.

2. Device according to Claim 1, **characterized in that** the film stage (1) has a film guide (12), a pressure mask (16) assigned to the film guide and movable in the region of the film guide (12) on the film stage towards the latter and away from it again, and means for driving (21 - 25) to move the pressure mask (16).

3. Device according to Claim 2, **characterized in that** there is provided a film pathway (P) along which the film (F) is guided on the film stage (1) in the scanning device, the film stage (1) being equipped with an adjustable slide (11) at right angles to the film pathway (P), **in that** the film guide (12) and the pressure mask (16) are arranged on the slide (11), **in that** the slide (11) is equipped with at least one additional film guide (13) and has a further movable pressure mask (17) for each additional film guide, assigned to the latter, whereby the film guides (12, 13) can be brought into the film pathway (P) one at a time by adjusting the slide (11) at right angles to the film pathway (P), and **in that** the means for driving (21 - 25) drive whichever of the pressure masks (16) is assigned to the film guide (12) that is situated in the film pathway (P) at the time in question.

## Revendications

1. Dispositif photoélectrique de balayage pour des originaux d'image contenus sur un film photographique, comportant un porte-film (1) pour le film (F), afin de fixer provisoirement, dans une position de balayage définie, chacun des originaux d'image contenus sur le film, comportant une source lumineuse (3) pour éclairer un original d'image (V) se trouvant en position de balayage, comportant un convertisseur photoélectrique (6) qui reçoit la lumière qui a traversé l'original d'image se trouvant en position de balayage, comportant des moyens optiques (5) pour reproduire l'original d'image (V) se trouvant en position de balayage, sur le convertisseur (6), comportant une électronique (8) pour la commande du convertisseur (6) et pour la sortie des signaux de balayage produits par celui-ci, et comportant un dispositif d'entaille de film (2), **caractérisé en ce que** le dispositif d'entaille de film est prévu sur le porte-film (1) dans la zone de la position de balayage, lequel découpe une encoche de position (N) dans le bord latéral du film (F), en un emplacement prédéfini par rapport à l'original d'image (V) se trouvant en position de balayage, et **en ce que** le convertisseur photoélectrique (6) convertit la lumière qui a traversé l'original d'image de manière bidimensionnelle et point d'image par point d'image, en signaux électriques de balayage.

2. Dispositif selon la revendication 1, **caractérisé en ce que** le porte-film (1) comporte un guide-film (12), un masque de pression (16) associé au guide-film, déplaçable, dans la zone du guide-film (12), sur le porte-film, en direction de celui-ci et depuis celui-ci, ainsi que des moyens d'entraînement (21-25) pour le déplacement du masque de pression (16).

3. Dispositif selon la revendication 2, **caractérisé en ce qu'**il est prévu une voie de film (P) le long de laquelle le film (F) est guidé sur le porte-film (1) dans le dispositif de balayage, le porte-film (1) est pourvu d'un chariot (11) déplaçable transversalement à la voie de film (P), **en ce que** le guide-film (12) et le masque de pression (16) sont disposés sur le chariot (11), **en ce que** le chariot (11) est équipé d'au moins un autre guide-film (13) et comporte pour chaque autre guide-film un autre masque de pression (17) mobile, associé à celui-ci, l'un des guide-films (12, 13) pouvant être amené dans la voie de film (P) par déplacement du chariot (11) transversalement à la voie de film (P), et **en ce que** les moyens d'entraînement (21-25) entraînent le masque de pression (16) qui est associé au guide-film (12) se trouvant dans la voie de film (P).
